# EUROPÄISCHE PATENTSCHRIFT

(11) **EP 1 303 429 B1**
(45) Veröffentlichungstag und Bekanntmachung des Hinweises auf die Patenterteilung: **22.11.2006**
(21) Anmeldenummer: 00956082.2
(22) Anmeldetag: 19.07.2000
(51) Int. Cl.: B60S 1/00

(54) **VORRICHTUNG ZUM ANTRIEB EINES WISCHARMS**
DEVICE FOR DRIVING A WIPER ARM
DISPOSITIF D'ENTRAINEMENT POUR BRAS D'ESSUIE-GLACE

(43) Veröffentlichungstag der Anmeldung: 23.04.2003
(73) Patentinhaber: ROBERT BOSCH GMBH, 70442 Stuttgart (DE)
(72) Erfinder: ZIMMER, Joachim, D-77880 Sasbach (DE)
(86) Internationale Anmeldenummer: PCT/DE2000/002349
(87) Internationale Veröffentlichungsnummer: WO 2002/005614

(56) Entgegenhaltungen:
- DE-A- 4 224 861
- US-A- 4 683 605
- US-A- 5 623 742

## Beschreibung

### Stand der Technik

Die Erfindung geht von einer Vorrichtung zum Antrieb eines Wischarms nach dem Oberbegriff des Anspruchs 1 aus. Eine derartige Vorrichtung ist z.B. aus der US-A-4 683 605 bekannt.

Wischeranlagen mit mehreren Scheibenwischern für Kraftfahrzeuge werden mit deren Wischerlagern direkt oder indirekt über eine Platine an der Fahrzeugkarosserie befestigt. Die Platine bzw. eine Rohrplatine - wenn der Wischerträger auch rohrförmige Hohlprofile enthält -, umfaßt eine Motorplatine, die einen Wischerantrieb mit einem Wischermotor und einem daran angebauten Getriebe trägt. Eine Abtriebswelle des Getriebes ist in einem Getriebedom gelagert und treibt in der Regel über eine Kurbel und Gelenkstangen weitere Kurbeln an, die mit einer Antriebswelle für jeden Scheibenwischer fest verbunden sind.

Ferner ist es möglich, daß die Abtriebswelle des Wischermotors ein Viergelenkhebelgetriebe antreibt. Dieses besitzt einen Antriebshebel, der auf einer Antriebsachse schwenkbar sitzt und über eine Koppelstange gelenkig mit einem Lenkerhebel verbunden ist. Dieser sitzt schwenkbar auf einer ortsfesten Achse. An der Koppelstange ist ein Befestigungsteil eines Wischarms einstückig angeformt und bildet mit diesem einen sogenannten Viergelenkwischhebel, an dem über ein Abklappgelenk das Gelenkteil des Wischarm befestigt ist. Der Antriebshebel kann direkt von einer Abtriebswelle des Wischermotors oder über eine Kurbel und Gelenkstangen angetrieben werden. Ferner kann er als Kreuzhebel ausgebildet sein. Die Kinematik des Viergelenkhebelgetriebes bewirkt eine kombinierte Hub-Schwenkbewegung des Scheibenwischers. Dadurch kann der Scheibenwischer besser der eckigen Kontur einer Fahrzeugscheibe folgen.

An dem Wischarm ist ein Wischblatt mit einem Tragbügelsystem und einer Wischleiste angelenkt. Für ein gutes Wischergebnis und um Rattern zu vermeiden, ist es wichtig, daß die Wischleiste mit ihrer Wischlippe unter einem bestimmten Anstellwinkel über die Fahrzeugscheibe geführt wird. Zwar sind die Fertigungstoleranzen der einzelnen, zahlreichen Bauelemente des Scheibenwischers und seines Antriebs gering, jedoch ist die Summe der Toleranzen zusammen mit denen der Befestigung an der Fahrzeugkarosserie und dieser selbst so groß, daß ein optimaler Anstellwinkel in einer Serienfertigung nicht gewährleistet ist. Während die Wischeranlagen wegen ihres großen Längen-/Breitenverhältnisses quer zur Fahrzeugrichtung gut ausgerichtet sind, ergibt sich vor allem in Fahrzeuglängsrichtung eine schlechte Ausrichtung.

### Vorteile der Erfindung

Nach der Erfindung ist das Befestigungsteil an der Koppelstange lösbar befestigt und um eine in Längsrichtung verlaufende Verstellachse in einem Verstellbereich relativ zur Koppelstange einstellbar. Dadurch kann das Befestigungsteil und mit ihm der Wischarm mit seinem Wischblatt um seine Längsachse eingestellt werden, so daß die Wischleiste während der Montage unabhängig von Fertigungstoleranzen am Fahrzeug ihren optimalen Anstellwinkel zu der Windschutzscheibe erhält.

Die Koppelstange ist zweckmäßigerweise zwischen den Gelenken mit dem Befestigungsteil verschraubt und hat zu beiden Seiten der Befestigungsstelle Führungsflächen, an denen das Befestigungsteil anliegt. Dadurch werden die Biegekräfte, die vom Wischblatt auf das Befestigungsteil übertragen werden, günstig vom Koppelteil aufgenommen. Um die Flächenpressung zwischen den Führungs- und Stützflächen klein zu halten, ist es vorteilhaft, daß zahlreiche Führungsflächen vorgesehen sind, die in Längsrichtung der Koppelstange einen großen Stützäbstand bilden. Zweckmäßigerweise sind die Führungsflächen in Urnfangsrichtung zur Verstellachse über einen Bereich von mehr als 180° verteilt, so daß sie Biegekräfte in allen Richtungen aufnehmen können. Hierzu können Führungsflächen herangezogen werden, die sich an den Seitenwänden des Koppelteils befinden.

Damit das Befestigungsteil um eine Längsachse schwenkbar ist, bestehen die Führungsflächen aus Teilen der Mantelflächen von koaxial zur Verstellachse liegenden Rotationskörpern, wobei die Verstellachse zweckmäßigerweise innerhalb der Koppelstange verläuft. Da durch die Verstellung der Anstellwinkel der Wischleiste verändert werden soll, ist es vorteilhaft, wenn die Verstellachse möglichst parallel zu dem zugehörigen Wischblatt verläuft. Dabei soll sich die Höhenlage des Wischarms, insbesondere die Höhenlage des Befestigungsteils im Bereich des Abklappgelenks, zur Windschutzscheibe nicht oder nur geringfügig ändern. Dies wird dadurch erreicht, daß die Verstellachse die Gelenkachse des Abklappgelenks schneidet oder einen möglichst geringen Abstand zu der Gelenkachse aufweist.

Das Befestigungsteil umfaßt zweckmäßigerweise mit einem zur Koppelstange hin offenen U-förmigen Profil die Koppelstange und ist zwischen den Gelenken an der Querwand des U-förmigen Profils mit der Koppelstange verbunden. Das U-förmige Profil ist biegesteif und ermöglicht eine große Variationsvielfalt, um Führungsflächen zwischen dem Koppelteil und dem Befestigungsteil großflächig anzuordnen. Im Bereich der Befestigungsstelle weist die Querwand des U-förmigen Profils des Befestigungsteils zur offenen Seite des U-förmigen Profils hin eine Ausbuchtung auf, die in eine entsprechende Vertiefung der Koppelstange eingreift. Die einander gegenüberliegenden Wände der Ausbuchtung und Vertiefung sind so gestaltet, daß sie eine Verstellung zulassen. Sie können auch als Führungsflächen ausgebildet sein.

In der Ausbuchtung finden Befestigungselemente in Form von Schrauben, Schraubenmuttern, Gewindebolzen und Gewindestutzen Platz, ohne daß sie über die äußere Kontur des Befestigungsteils hinausragen. Dadurch kann gemäß einer weiteren Ausgestaltung der Erfindung eine Kappe, vorzugsweise aus Kunststoff, die Befestigungsstelle abdecken, indem sie auf die Koppelstange aufgesteckt wird. Dadurch vermindert sich die Gefahr, daß bei der Bewegung der Koppelstange zwischen dieser und den angelenkten Hebeln Teile eingeklemmt werden. Aus optischen und strömungstechnischen Gründen ist es zweckmäßig, daß das Befestigungsteil im Bereich der Anschlußstelle der Kappe eine Stufe aufweist, die etwa der Materialstärke der Kappe entspricht, so daß sich die äußere Kontur der Kappe bündig an die äußere Kontur des Befestigungsteils anschließt.

Die Einstellung dient vor allem zur Korrektur von Fertigungstoleranzen. Um zu vermeiden, daß das Befestigungsteil grob fehl montiert wird oder sich beliebig verstellt, wenn sich die Verschraubung lockern sollte, ist es zweckmäßig, daß der Verstellbereich begrenzt ist, z.B. auf einen Winkelbereich von weniger als 5°, vorzugsweise auf 3°. Hierzu dienen Anschläge zwischen dem Befestigungsteil und der Koppelstange bzw. zwischen den mit diesen Teilen fest verbundenen Elementen.

Um eine stufenlose Verstellung zu ermöglichen, sind die Führungsflächen glatt oder für einen besseren Reibschluß aufgerauht. Durch eine Riffelung in Längsrichtung parallel zur Verstellachse erreicht man eine stufenweise Verstellmöglichkeit. Diese ist vorteilhaft, um die Einstellung von einer Ausgangsposition in definierten Winkelschritten vornehmen zu können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, vorausgesetzt, daß die Erfindung durch die Ansprüche definiert ist.

Es zeigen:
- Fig. 1: einen Ausschnitt eines Hebelgetriebes,
- Fig. 2: ein Hebelgetriebe nach Fig. 1 mit einem Befestigungsteil,
- Fig. 3: eine perspektivische Ansicht einer Koppelstange,
- Fig. 4: eine Variante zu Fig. 3,
- Fig. 5: einen Längsschnitt durch eine Koppelstange mit einem Befestigungsteil und einer Abdeckkappe,
- Fig. 6: einen Schnitt entsprechend der Linie V1-VI in. Fig. 5,
- Fig. 7: einen Schnitt entsprechend der Linie VII-VII in Fig. 5,
- Fig. 8-11: Varianten zu Fig. 7 und
- Fig. 12: einen Schnitt entsprechend der Linie XII-XII in Fig. 5.

### Beschreibung der Ausführungsbeispiele

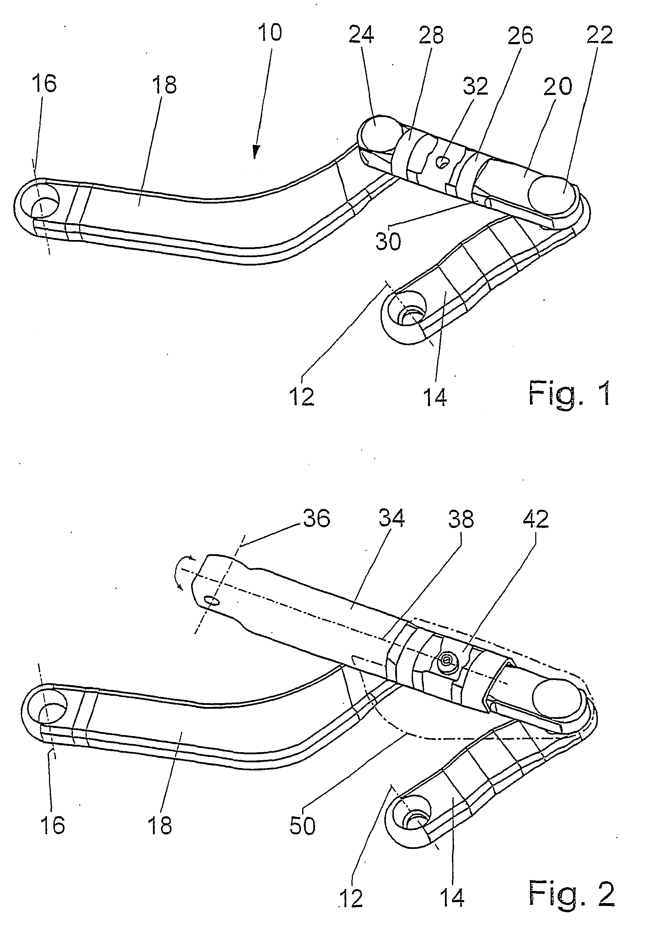

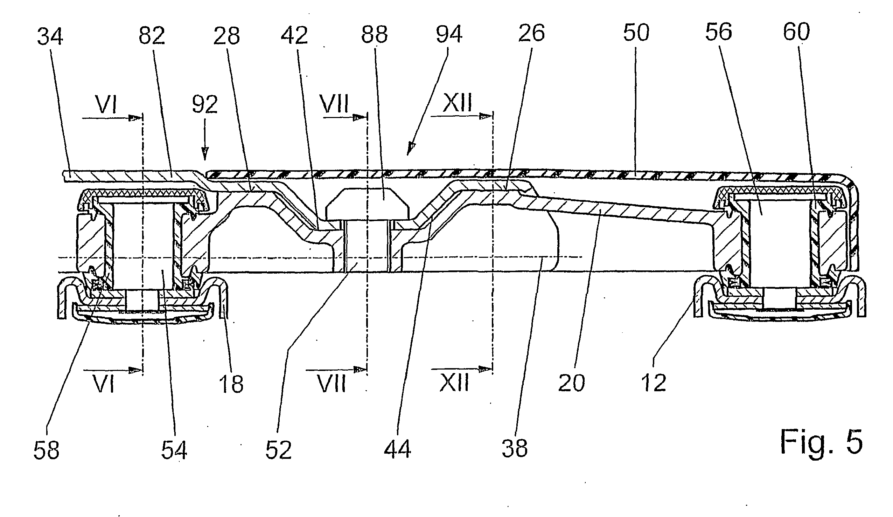

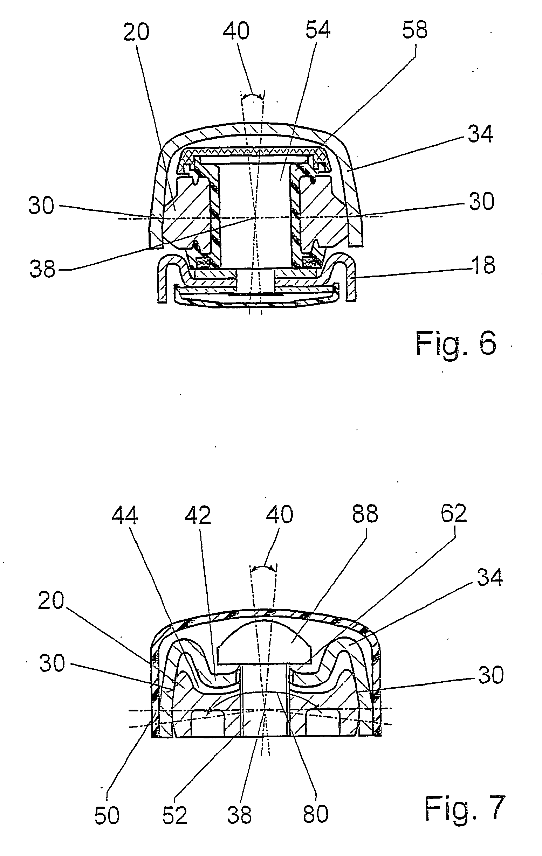

Das in Fig. 1 dargestellte Hebelgetriebe 10 umfaßt einen Antriebshebel 14, der um eine Antriebsachse 12 drehbar gelagert ist, einen Lenkerhebel 18, der um eine Achse 16 drehbar gelagert ist und eine Koppelstange 20, die über Gelenke 22, 24 an einem Ende mit dem Antriebshebel 14 und am anderen Ende mit dem Lenkerhebel 18 verbunden ist. Die Antriebsachse 12 und die Achse 16 sind an einer nicht näher dargestellten Fahrzeugkarosserie direkt oder indirekt über eine Platine angeordnet. Die Gelenke 22, 24 werden durch Gelenkbolzen 54, 56 gebildet, die über Lagerschalen 58, 60 in der Koppelstange 20 gelagert sind (Fig. 5, Fig. 6) und mit dem Lenkerhebel 18 bzw. dem Antriebshebel 14 vernietet sind.

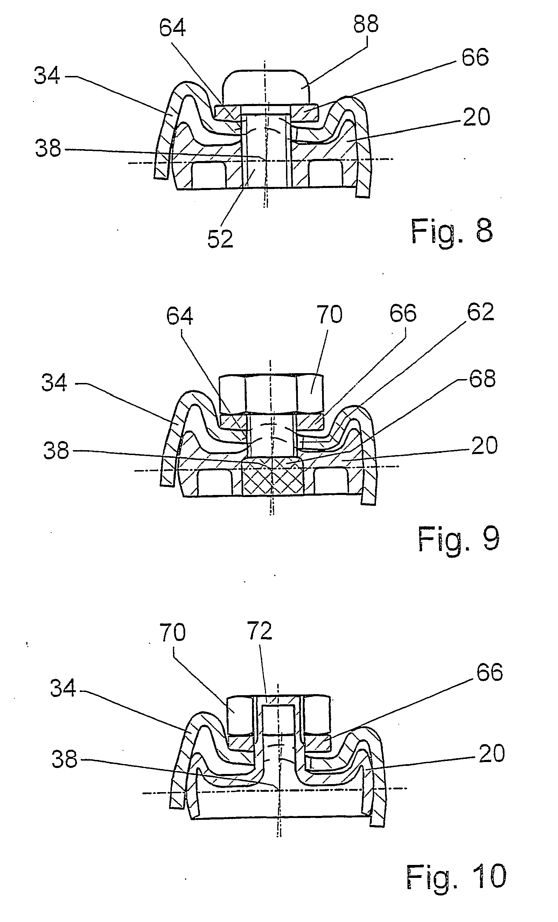

Zwischen den Gelenken 22 und 24 befindet sich eine Befestigungsstelle 94 für ein Befestigungsteil 34. Dieses besitzt ein zur Koppelstange 20 hin offenes U-förmiges Profil, mit dem es die Koppelstange 20 auf drei Seiten umfaßt. Im Bereich der Befestigungsstelle 94 besitzt die Koppelstange 20 an der oberen Seite eine Vertiefung 44, in die eine Ausbuchtung 42 der Querwand 82 des Befestigungsteils 34 eingreift. Das Befestigungsteil 34 ist durch mindestens eine Schraubverbindung an der Koppelstange 20 befestigt. Diese wird bei den Ausführungen nach Fig. 1, Fig. 2, Fig. 5, Fig. 7 und Fig. 8 von einem Gewindeloch 32 in der Koppelstange 20 und einer Schraube 52 gebildet, deren Schraubenkopf 88 unmittelbar an einer gewölbten Fläche des Befestigungsteils 34 oder mittelbar über eine Formscheibe 66 (Fig. 8) am Befestigungsteil 34 anliegt und das Befestigungsteil 34 gegen die Koppelstange 20 drückt. Es können auch mehrere Schraubverbindungen vorzugsweise in Richtung der Verstellachse 38 hintereinander vorgesehen werden.

In Achsrichtung der Koppelstange 20 befinden sich zu beiden Seiten der Schraubverbindung 32, 52 Führungsflächen 26, 28, an denen sich das Befestigungsteil 34 abstützt. Die Führungsflächen 26, 28 werden von Teilflächen von Rotationskörpern gebildet, die koaxial zu einer Verstellachse 38 liegen, so daß das Befestigungsteil 34 um die Verstellachse 38 gedreht und justiert werden kann. Die Verstellachse 38 verläuft im wesentlichen in Längsrichtung des Befestigungsteils 34 und damit parallel zu einem nicht näher dargestellten Wischblatt mit einer Wischleiste, das über eine Wischstange und ein Gelenkteil mittels eines Abklappgelenks am Befestigungsteil 34 angelenkt ist. Eine Gelenkachse des Abklappgelenks ist mit 36 bezeichnet (Fig. 2).

Um die Biegekräfte, die das Wischblatt auf das Befestigungsteil 34 überträgt, günstig auf die Koppelstange 20 weiterzuleiten, besitzen die Führungsflächen 26, 28 einen entsprechend großen axialen Abstand und eine ausreichend große Kontaktfläche, so daß die Flächenpressung infolge der Biegekräfte im Verhältnis zur Flächenpressung infolge der Arretierkräfte gering ist. Die Führung und Halterung des Befestigungsteils 34 kann durch weitere Führungsflächen 30 an den Seiten der Koppelstange 20 verbessert werden, die eine beachtliche axiale Erstreckung aufweisen und somit einen großen Stützabstand 78 bilden. Die Führungsflächen 26, 28, 30 werden zweckmäßigerweise so um die Verstellachse 38 angeordnet, daß sie einen Bereich 80 von mehr als 180° erfassen (Fig. 7). Dadurch können auch von unten wirkende Kräfte sich über Führungsflächen 26, 28, 30 an der Koppelstange 20 abstützen.

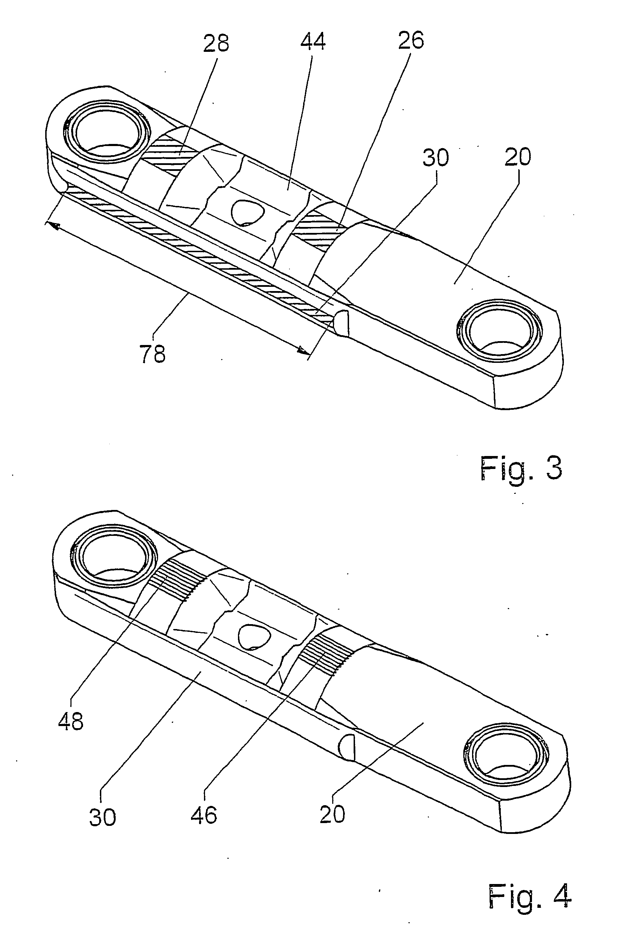

Um das Befestigungsteil 34 stufenlos einstellen zu können, sind die Führungsflächen 26, 28, 30 glatt oder zur besseren Kraftübertragung aufgerauht (Fig. 3). Eine Ausführung nach Fig. 4 zeigt Führungsflächen 46, 48, die parallel zur Verstellachse 38 geriffelt sind. Dadurch ist es möglich, ausgehend von einer gegebenen Position die Einstellung in kleinen vorgegebenen Winkelschritten vorzunehmen. Die Einstellung des Befestigungsteils 34 dient zur Optimierung des Anstellwinkels der Wischleiste zur Windschutzscheibe. Zu diesem Zweck reicht ein relativ kleiner Verstellbereich 40 aus, der weniger als 5°, vorzugsweise 3° beträgt. Der Verstellbereich 40 wird durch Anschläge 64 begrenzt, die zwischen dem Befestigungsteil 34 und der Koppelstange 20 oder zwischen Teilen angeordnet sind, die mit diesen verbunden sind, z.B. zwischen einem Durchgangsloch 62 und einem Gewindebolzen 68 oder einer Formscheibe 66 und dem Befestigungsteil 34 oder sonstigen geeigneten Teilen des Befestigungsteils 34 und der Koppelstange 20.

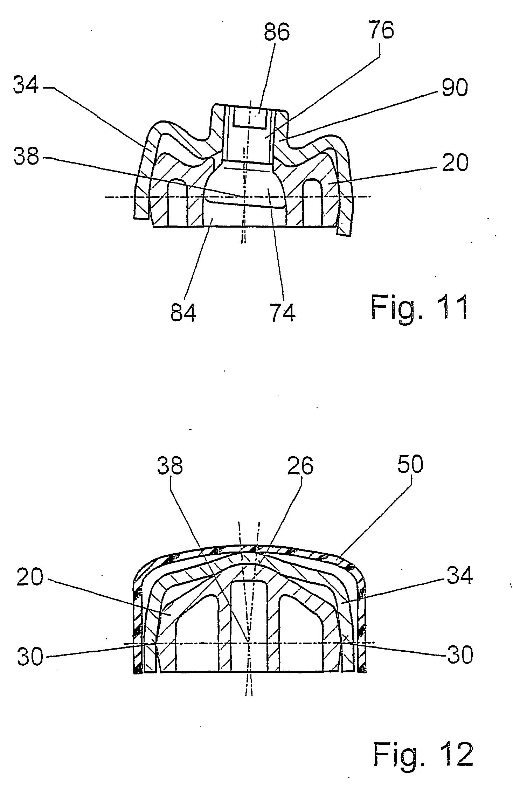

Die Schraubverbindung zwischen dem Befestigungsteil 34 und der Koppelstange 20 kann verschiedenartig ausgeführt sein. Fig. 9 zeigt einen Gewindebolzen 68, der in der Koppelstange 20 eingegossen oder eingepreßt ist und auf den eine Schraubenmutter 70 geschraubt ist, die über eine Formscheibe 66 das Befestigungsteil 34 gegen die Führungsflächen 26, 28, 30, 46, 48 drückt. Die Ausführung nach Fig. 10 unterscheidet sich davon, daß anstelle des Gewindebolzens 68 an eine als Blechteil tiefgezogene Koppelstange 20 ein Gewindestutzen 72 angeformt ist, auf den die Schraubenmutter 70 geschraubt ist. Schließlich zeigt Fig. 11 eine Variante, bei der die Koppelstange 20 eine kalottenförmige Ausnehmung 84 hat, in die ein Gewindebolzen 76 mit einem Kugelkopf 74 eingesetzt ist, wobei der Gewindebolzen 76 in einen Gewindestutzen 90 des Befestigungsteils 34 eingeschraubt ist. Hierzu dient ein Innensechkant 86 an einer Stirnseite des Gewindebolzens 76.

Die dargestellten Schraubverbindungen liegen innerhalb der Ausbuchtung 42 des Befestigungsteils 34, so daß sie nicht über die Außenkontur des Befestigungsteils 34 herausragen. Sie werden zweckmäßigerweise mit einer Kappe 50 abgedeckt, die auf die Koppelstange 20 aufgesteckt ist (Fig. 5) und über die Befestigungsstelle 94 hinaus bis in den Bereich der Gelenke 22, 24 reicht. Dadurch wird die Gefahr im Bewegungsbereich der Koppelstange 20 und des Lenkerhebels 18 bzw. des Antriebshebels 14 verringert, daß Teile beim Betrieb des Wischers eingeklemmt werden. Somit werden Verletzungen und Beschädigungen vermieden. Das Befestigungsteil 34 besitzt in einem Anschlußbereich 92 eine Stufe, an die sich die Kontur der Kappe 50 außen bündig anschließt.

### Bezugszeichen

- 10: Hebelgetriebe
- 12: Antriebsachse
- 14: Antriebshebel
- 16: Achse
- 18: Lenkerhebel
- 20: Koppelstange
- 22: Gelenk
- 24: Gelenk
- 26: Führungsfläche
- 28: Führungsfläche
- 30: Führungsfläche
- 32: Gewindeloch
- 34: Befestigungsteil
- 36: Gelenkachse
- 38: Verstellachse
- 40: Verstellbereich
- 42: Ausbuchtung
- 44: Vertiefung
- 46: Führungsfläche
- 48: Führungsfläche
- 50: Kappe
- 52: Schraube
- 54: Gelenkbolzen
- 56: Gelenkbolzen
- 58: Lagerschale
- 60: Lagerschale
- 62: Durchgangsloch
- 64: Anschlag
- 66: Formscheibe
- 68: Gewindebolzen
- 70: Schraubenmutter
- 72: Gewindestutzen
- 74: Kugelkopf
- 76: Gewindebolzen
- 78: Stützabstand
- 80: Bereich
- 82.: Querwand
- 84: Ausnehmung
- 86: Innensechskant
- 88: Schraubenkopf
- 90: Gewindestutzen
- 92: Anschlußbereich
- 94: Befestigungsstelle

## Patentansprüche

1. Vorrichtung zum Antrieb eines Wischarms mit einem Hebelgetriebe (10), das einen um eine Antriebsachse (12) schwenkbaren Antriebshebel (14) und einen um eine Achse (16) schwenkbaren Lenkerhebel (18) aufweist, wobei der Antriebshebel (14) und der Lenkerhebel (18) über Gelenke (22, 24) durch eine Koppelstange (20) miteinander verbunden sind, die ein Befestigungsteil (34) des Wischarms trägt, **dadurch gekennzeichnet, daß** das Befestigungsteil (34), an der Koppelstange (20) lösbar befestigt und um eine in seiner Längsrichtung verlaufendenVerstellachse (38) in einem Verstellbereich (40) relativ zur Koppelstange (20) einstellbar ist.

2. Vorrichtung nach Anspruch 1, **dadurch gekennzeichnet, daß** die Koppelstange (20) zwischen den Gelenken (22, 24) mit dem Befestigungsteil (34) verschraubt ist und in axialer Richtung zu beiden Seiten der Befestigungsstelle (94) Führungsflächen (26, 28, 30, 46, 48) hat, an denen das Befestigungsteil (34) anliegt, wobei die Führungsflächen (26, 28, 30, 46, 48) aus Teilen der Mantelflächen von koaxial zur Verstellachse (38) liegenden Rotationskörpern bestehen und die Verstellachse (38) innerhalb der Koppelstange (20) verläuft.

3. Vorrichtung nach einem der vorhergehenden Ansprüche, **dadurch gekennzeichnet, daß** die Verstellachse.(38) möglichst parallel zu einem zugehörigen Wischblatt verläuft.

4. Vorrichtung nach einem der vorhergehenden Ansprüche, **dadurch gekennzeichnet, daß** die Verstellachse (38) in einem möglichst geringen Abstand zu einer Gelenkachse (36) eines Abklappgelenks verläuft.

5. Vorrichtung nach einem der vorhergehenden Ansprüche, **dadurch gekennzeichnet, daß** das Befestigungsteil (34) durch eine Schraubverbindung (32, 52; 68, 72 und 70) an der Koppelstange (20) befestigt ist, wobei zwischen einem Schraubenkopf (88) bzw. einer Schraubenmutter (70) und dem Befestigungsteil (34) eine Formscheibe (66) vorgesehen ist.

6. Vorrichtung nach einem der vorhergehenden Ansprüche, **dadurch gekennzeichnet, daß** die Führungsflächen (26, 28, 30, 46, 48) in Längsrichtung der Koppelstange (20) einen großen Stützabstand (78) aufweisen und in Umfangsrichtung zur Verstellachse (38) einen Bereich (80) von mehr als 180° erfassen.

7. Vorrichtung nach einem der vorhergehenden Ansprüche, **dadurch gekennzeichnet, daß** das Befestigungsteil (34) mit einem zur Koppelstange (20) hin offenen U-förmigen Profil die Koppelstange (20) umfaßt und zwischen den Gelenken (22, 24) an der Querwand (82) des u-förmigen Profils mit der Koppelstange (20) verbunden ist.

8. Vorrichtung nach Anspruch 7, **dadurch gekennzeichnet, daß** die Querwand (82) des Befestigungsteils (34) im Bereich der Befestigungsstelle (94) zur offenen Seite des U-förmigen Profils eine Ausbuchtung (42) aufweist, die in eine entsprechende Vertiefung (44) der Koppelstange (20) eingreift.

9. Vorrichtung nach Anspruch 8, **dadurch gekennzeichnet, daß** in Längsrichtung in der Nähe der Ausbuchtung (42) bzw. Vertiefung (44) mindestens eine Führungsfläche (26, 28, 46, 48) vorgesehen ist.

10. Vorrichtung nach einem vorhergehenden Ansprüche, **dadurch gekennzeichnet, daß** die Führungsflächen(26, 28, 46, 48) aufgerauht oder in Längsrichtung geriffelt sind.

11. Vorrichtung nach einem der vorhergehenden Ansprüche, **dadurch gekennzeichnet, daß** die Koppelstange (20) mindestens einen eingegossenen oder eingepreßten Gewindebolzen (68) aufweist.

12. Vorrichtung nach einem der vorhergehenden Ansprüche, **dadurch gekennzeichnet, daß** die Koppelstange (20) ein tiefgezogenes Blechteil mit mindestens einem angeformten Gewindestutzen (72) ist.

13. Vorrichtung nach einem der vorhergehenden Ansprüche, **dadurch gekennzeichnet daß** die Koppelstange (20) eine kalottenförmige Ausnehmung (84.) mit einer Öffnung für die Aufnahme eines Gewindebolzens (76) mit einem Kugelkopf (74) und Innensechskant (86) aufweist, wobei der Gewindebolzen (76) in einen Gewindestutzen (90) des Befestigungsteils (34) eingeschraubt ist.

14. Vorrichtung nach einem der vorhergehenden Ansprüche, **dadurch gekennzeichnet, daß** mindestens ein Anschlag (64) den Verstellbereich (40) begrenzt.

15. Vorrichtung nach Anspruch 14, **dadurch gekennzeichnet, daß** der Schraubenkopf (88), die Formscheibe (66) oder ein Durchgangsloch (62) für die Schraube (52), der Gewindebolzen (68) oder der Gewindestutzen (72) den Anschlag (64) bilden.

16. Vorrichtung nach Anspruch 14 oder 15, **dadurch gekennzeichnet, daß** der Verstellbereich (40) kleiner als fünf Grad, vorzugsweise drei Grad ist.

17. Vorrichtung nach einem der vorhergehenden Ansprüche, **dadurch gekennzeichnet, daß** die Koppelstange (20) eine Kappe (50) trägt, die die Befestigungsstelle (94) zwischen der Koppelstange (20) und dem Befestigungsteil (34) und/oder den angrenzenden Bereich der Gelenke (22, 24) abdeckt.

18. Vorrichtung nach Anspruch 17, **dadurch gekennzeichnet, daß** das Befestigungsteil (34) im Anschlußbereich (92) eine Stufe aufweist, an die sich die Kontur der Kappe (50) außen bündig anschließt.

## Claims

1. Device for driving a wiper arm with a lever mechanism (10), which has a drive lever (14) which is pivotable about a drive axis (12), and a link lever (18) which is pivotable about an axis (16), the drive lever (14) and the link lever (18) being connected to each other by a coupling rod (20) via joints (22, 24), the coupling rod bearing a fastening part (34) of the wiper arm, **characterized in that** the fastening part (34) is fastened releasably to the coupling rod (20) and can be the adjusted relative to the coupling rod (20) in a region of adjustment (40) about an axis of adjustment (38) running in its longitudinal direction.

2. Device according to Claim 1, **characterized in that** the coupling rod (20) is screwed between the joints (22, 24) to the fastening part (34) and, in the axial direction on both sides of the fastening point (94), has guide surfaces (26, 28, 30, 46, 48) on which the fastening part (34) bears, the guide surfaces (26, 28, 30, 46, 48) comprising parts of the circumferential surfaces of rotation bodies lying coaxially with the axis of adjustment (38), and the axis of adjustment (38) running within the coupling rod (20).

3. Device according to one of the preceding claims, **characterized in that** the axis of adjustment (38) runs as parallel as possible to an associated wiper blade.

4. Device according to one of the preceding claims, **characterized in that** the axis of adjustment (38) runs at the smallest possible distance from an axis of articulation (36) of a fold-down joint.

5. Device according to one of the preceding claims, **characterized in that** the fastening part (34) is fastened to the coupling rod (20) by a screw connection (32, 52; 68, 72 and 70), with a moulded washer (66) being provided between a screw head (88) or a screw nut (70) and the fastening part (34).

6. Device according to one of the preceding claims, **characterized in that** the guide surfaces (26, 28, 30, 46, 48) have a large supporting distance (78) in the longitudinal direction of the coupling rod (20) and cover a region (80) of more than 180° in the circumferential direction with respect to the axis of adjustment (38).

7. Device according to one of the preceding claims, **characterized in that** the fastening part (34) surrounds the coupling rod (20) by means of a U-shaped profile open towards the coupling rod (20) and is connected to the coupling rod (20) between the joints (22, 24) at the transverse wall (82) of the U-shaped profile.

8. Device according to Claim 7, **characterized in that**, in the region of the fastening point (94), the transverse wall (82) of the fastening part (34) has, towards the open side of the U-shaped profile, a bulge (42) which engages in a corresponding depression (44) of the coupling rod (20).

9. Device according to Claim 8, **characterized in that** at least one guide surface (26, 28, 46, 48) is provided in the longitudinal direction in the vicinity of the bulge (42) or depression (44).

10. Device according to one of the preceding claims, **characterized in that** the guide surfaces (26, 28, 46, 48) are roughened or scored in the longitudinal direction.

11. Device according to one of the preceding claims, **characterized in that** the coupling rod (20) has at least one threaded bolt (68) which is cast or pressed into it.

12. Device according to one of the preceding claims, **characterized in that** the coupling rod (20) is a deep-drawn sheet-metal part with at least one integrally formed threaded connecting piece (72).

13. Device according to one of the preceding claims, **characterized in that** the coupling rod (20) has a dome-shaped recess (84) with an opening for receiving a threaded bolt (76) with a ball head (74) and hexagonal socket (86), the threaded bolt (76) being screwed into a threaded connecting piece (90) of the fastening part (34).

14. Device according to one of the preceding claims, **characterized in that** at least one stop (64) bounds the region of adjustment (40).

15. Device according to Claim 14, **characterized in that** the screw head (88), the moulded washer (66) or a passage hole (62) for the screw (52), the threaded bolt (68) or the threaded connecting piece (72) form the stop (64).

16. Device according to Claim 14 or 15, **characterized in that** the region of adjustment (40) is smaller than 5°, and is preferably 3°.

17. Device according to one of the preceding claims, **characterized in that** the coupling rod (20) bears a cap (50) which covers the fastening point (94) between the coupling rod (20) and the fastening part (34) and/or the adjacent region of the joints (22, 24).

18. Device according to Claim 17, **characterized in that**, in the connecting region (92), the fastening part (34) has a step which is adjoined in an outwardly flush manner by the contour of the cap (50).

## Revendications

1. Dispositif d'entraînement d'un bras d'essuie-glace comportant une transmission à levier (10) ayant un levier d'entraînement (14) pivotant autour d'un axe d'entraînement (12) et un levier à bras (18) pivotant autour d'un axe (16), le levier d'entraînement (14) et le levier à bras (18) étant reliés par des articulations (22, 24) à l'aide d'une bielle (20) qui porte une pièce de fixation (34) du bras d'essuie-glace,
**caractérisé en ce que**
la pièce de fixation (34) est fixée de manière amovible à la bielle (20) et est réglable suivant un axe réglable (38) dirigé dans sa direction longitudinale dans une plage de réglage (40) par rapport à la bielle (20).

2. Dispositif selon la revendication 1,
**caractérisé en ce que**
la bielle (20) est vissée à la pièce de fixation (34) entre les articulations (22, 24) et présente des surfaces de guidage (26, 28, 30, 46, 48) dans la direction axiale des deux côtés du point de fixation (94), la pièce de fixation (34) s'appliquant contre les surfaces de guidage (26, 28, 30, 46, 48) formées par des parties de surface enveloppe d'organes de rotation disposées co-axialement à l'axe de réglage (38) et l'axe de réglage (38) passe dans la bielle (20).

3. Dispositif selon l'une des revendications précédentes,
**caractérisé en ce que**
l'axe de réglage (38) est aussi parallèle que possible au balai d'essuie-glace.

4. Dispositif selon l'une quelconque des revendications précédentes,
**caractérisé en ce que**
l'axe de réglage (38) est situé à une distance aussi faible que possible de l'axe d'articulation (36) d'une articulation rabattable.

5. Dispositif selon l'une quelconque des revendications précédentes,
**caractérisé en ce que**
la pièce de fixation (34) est fixée à la bielle (20) par une liaison à vis (32, 52 ; 68, 72, 70) et une rondelle formée (66) est prévue entre la tête de vis (88) ou l'écrou (70) et la pièce de fixation (34).

6. Dispositif selon l'une quelconque des revendications précédentes,
**caractérisé en ce que**
les surfaces de guidage (26, 28, 30, 46, 48) présentent une distance d'appui (78) importante dans la direction longitudinale de la bielle (20) et une zone (80) supérieure à 180° dans la direction périphérique de l'axe de réglage (38).

7. Dispositif selon l'une quelconque des revendications précédentes,
**caractérisé en ce que**
la pièce de fixation (34) entoure la bielle (20) par un profilé en U, ouvert vers la bielle (20) et est reliée à la cloison (82) du profilé en U à la bielle (20) entre les articulations (22, 24).

8. Dispositif selon la revendication 7,
**caractérisé en ce que**
la cloison (82) de la pièce de fixation (34) comporte un dégagement (42) dans la zone du point de fixation (94), tourné vers le côté ouvert du profilé en U et elle pénètre dans une cavité correspondante (44) de la bielle (20).

9. Dispositif selon la revendication 8,
**caractérisé par**
au moins une surface de guidage (26, 28, 46, 48) dans la direction longitudinale à proximité du dégagement (42) ou de la cavité (44).

10. Dispositif selon l'une quelconque des revendications précédentes,
**caractérisé en ce que**
les surfaces de guidage (26, 28, 46, 48) sont rendues rugueuses ou sont moletées dans la direction longitudinale.

11. Dispositif selon l'une quelconque des revendications précédentes,
**caractérisé en ce que**
la bielle de couplage (20) comporte au moins un goujon fileté (68) coulé dans la masse ou enfoncé à force.

12. Dispositif selon l'une quelconque des revendications précédentes,
**caractérisé en ce que**
la bielle (20) est une pièce en tôle obtenue par emboutissage profond ayant au moins un embout fileté (72) formé sur la pièce.

13. Dispositif selon l'une quelconque des revendications précédentes,
**caractérisé en ce que**
la bielle (20) comporte une cavité (84) en forme de calotte munie d'une ouverture pour recevoir un goujon fileté (76) avec une tête sphérique (74) et une empreinte à six pans (86), le goujon fileté (76) étant vissé dans un embout fileté (90) de la pièce de fixation (34).

14. Dispositif selon l'une quelconque des revendications précédentes,
**caractérisé en ce qu'**
au moins une butée (64) limite la plage de réglage (40).

15. Dispositif selon la revendication 14,
**caractérisé en ce que**
la tête de vis (88), la rondelle formée (66) ou un orifice traversant (62) pour la vis (52), le goujon fileté (68) ou l'embout fileté (72) constituent la butée (64).

16. Dispositif selon la revendication 14 ou 15,
**caractérisé en ce que**
la plage de réglage (40) est inférieure à 5° et de préférence égale à 3°.

17. Dispositif selon l'une quelconque des revendications précédentes,
**caractérisé en ce que**
la bielle (20) comporte un capuchon (50) couvrant le point de fixation (94) entre la bielle (20) et la pièce de fixation (34) et/ou la zone adjacente des articulations (22, 24).

18. Dispositif selon la revendication 17,
**caractérisé en ce que**
la pièce de fixation (34) présente un gradin dans la zone de raccordement (92) qui rejoint extérieurement le niveau du contour du capuchon (50).
